# EUROPEAN PATENT SPECIFICATION

(11) **EP 2 971 585 B1**
(45) Date of publication and mention of the grant of the patent: **06.01.2021**
(21) Application number: 14767834.6
(22) Date of filing: 13.03.2014
(51) Int. Cl.: F01D 11/00, F01D 9/02, F02C 7/00

(54) **GAS TURBINE ENGINE TURBINE VANE RAIL SEAL**
SCHIENENDICHTUNG FÜR EINE GASTURBINENSCHAUFEL
JOINT D'ÉTANCHÉITÉ DE RAIL D'AUBE DE TURBINE À GAZ

(30) Priority: 15.03.2013 US 201361786867 P
(43) Date of publication of application: 20.01.2016
(73) Proprietor: United Technologies Corporation, Farmington, CT 06032 (US)
(72) Inventor: BANKS, Anton G., Manchester, Connecticut 06042 (US); TURKO, Andy, Southington, Connecticut 06489 (US)
(74) Representative: Dehns
(86) International application number: PCT/US2014/025401
(87) International publication number: WO 2014/151299

(56) References cited:
- FR-A1- 2 929 983
- GB-A- 2 462 268
- US-A1- 2007 025 837
- US-A1- 2007 122 275
- US-A1- 2007 122 275
- US-A1- 2007 166 154
- US-A1- 2007 166 154
- US-A1- 2012 107 122
- US-A1- 2012 189 426

## Description

### BACKGROUND

This disclosure relates to a gas turbine engine, and more particularly to turbine vane platform rail sealing arrangement.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Some turbine vane arrangements incorporate multiple vanes supported by a common platform. The vanes are typically cooled by a cooling fluid provided to the backside of an outer platform. Efficient use of the cooling fluid is desired to maintain the overall desired engine efficiency.

US 2007/0122275 A1 discloses a method for assembling a turbine nozzle for a gas turbine engine.

### SUMMARY

From a first aspect, the invention provides a stator vane seal assembly for a gas turbine engine as claimed in claim 1.

In a further embodiment of any of the above, the aft rail includes an annular groove. The blade outer air seal includes a first flange that is received in the annular groove.

In a further embodiment of any of the above, the annular seal includes undulations.

In a further embodiment of any of the above, the scallop extends radially to an outer periphery of the rail.

In a further embodiment of any of the above, the rail includes a radially extending recess that receives the scallop seal. The scallop seal is flush with a surface of the rail.

In a further embodiment of any of the above, the annular seal is engaged in the scallop seal and the surface.

In a further embodiment of any of the above, the scallop seal is rectangular in shape.

In a further embodiment of any of the above, a first cavity is arranged on an outer side of a platform providing the rail. The blade outer seal separates the second and third cavities. The scallop seal and the annular seal are configured to prevent fluid flow from the first cavity to both of the second and third cavities.

In a further embodiment of any of the above, the scallop seal is flush with a surface of the rail. The annular seal is engaged in the scallop seal and the surface.

In a further embodiment of any of the above, the scallop seal is rectangular in shape.

In a further embodiment of any of the above, the annular seal includes undulations.

In another exemplary embodiment, a gas turbine engine as claimed in claim 10 is provided.

In a further embodiment of any of the above, the turbine section includes a high pressure section that is arranged fluidly forward of a low pressure turbine section. The vane is arranged in the low pressure turbine section.

In a further embodiment of any of the above, the scallop extends radially to an outer periphery of the rail.

In a further embodiment of any of the above, the rail includes a radially extending recess that receives the scallop seal. The scallop seal is flush with a surface of the rail and has an annular seal that engages the scallop seal and the surface.

In a further embodiment of any of the above, a cooling source is configured to provide a cooling fluid to a first cavity arranged on an outer side of a platform providing the rail. The blade outer seal separates the second and third cavities. The scallop seal and the annular seal are configured to prevent fluid flow from the first cavity to both of the second and third cavities.

In a further embodiment of any of the above, the cooling source is the compressor section.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2A is a schematic cross-sectional view through a low pressure turbine section.
Figure 2B is a partial view of a portion of a turbine vane array having a stress relief feature.
Figure 3 is an enlarged view of a stator vane seal assembly within a turbine section.
Figure 4 is an enlarged view of the stress relief feature with a scallop seal.
Figure 5 is a cross-sectional view taken along the line 5-5 of Figure 3.

### DETAILED DESCRIPTION

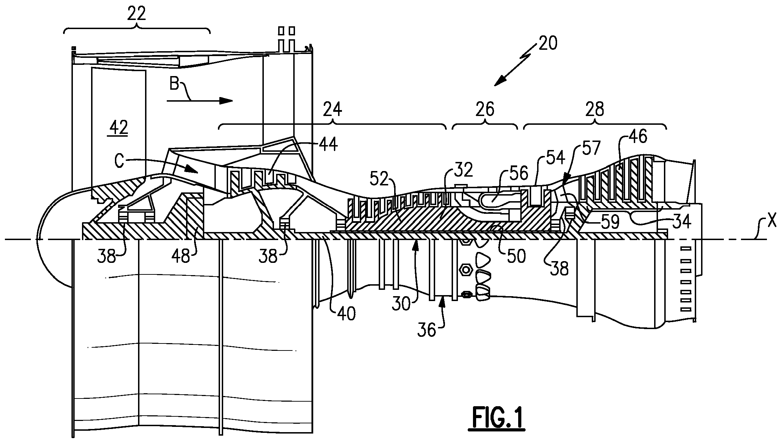

Figure 1 schematically illustrates an example gas turbine engine 20 for aircraft applications. However, it should be understood that the disclosed stator vane seal assembly can be used in other gas turbine applications, such as industrial gas turbines.

The engine 20 includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis X.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 57 of the engine static structure 36 is arranged generally between the high pressure turbine 54 and the low pressure turbine 46. The mid-turbine frame 57 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 57 includes vanes 59, which are in the core airflow path and function as an inlet guide vane for the low pressure turbine 46. Utilizing the vane 59 of the mid-turbine frame 57 as the inlet guide vane for low pressure turbine 46 decreases the length of the low pressure turbine 46 without increasing the axial length of the mid-turbine frame 57. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 10,668m (35,000 feet). The flight condition of 0.8 Mach and 10,668m (35,000 ft.), with the engine at its best fuel consumption - also known as "bucket cruise Thrust Specific Fuel Consumption ('TSFC')" - is the industry standard parameter of kg (pound-mass (lbm)) of fuel per hour being burned divided by N (pound-force (lbf)) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram K)/518.7]^{0.5} ([(Tram °R) / 518.7] ^0.5). The "Low corrected fan tip speed", as disclosed herein according to one non-limiting embodiment, is less than about 350.5 m/s (1150 ft/second).

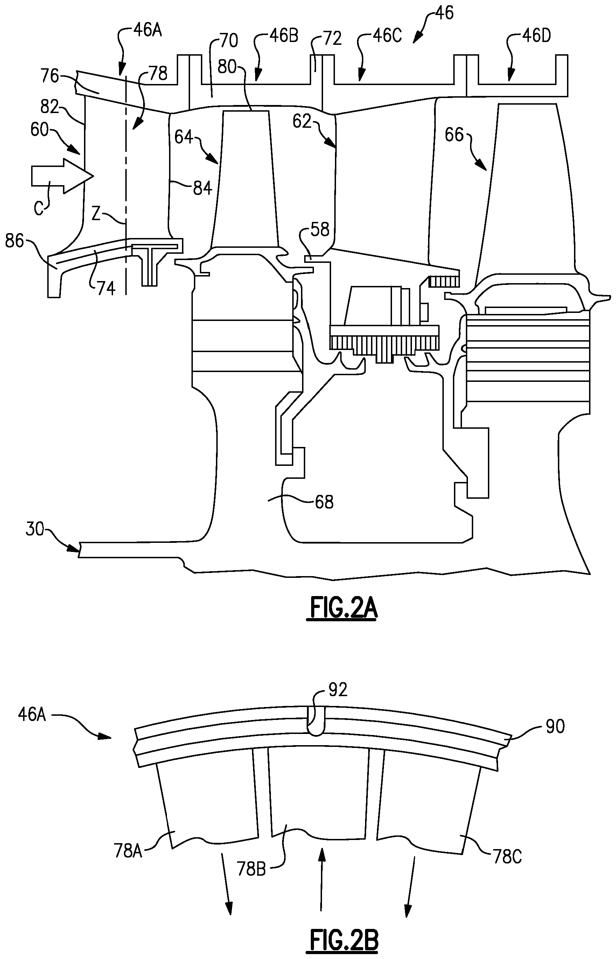

Referring to Figure 2A, a cross-sectional view through a low pressure turbine section 46 is illustrated. However, it should be understood that disclosed seal assembly can be used in other areas of the turbine section 28 or in the compressor section 24. In the example low pressure turbine section 46, first and second arrays 46a, 46c of circumferentially spaced fixed vanes 60, 62 are axially spaced apart from one another. A first stage array 46b of circumferentially spaced turbine blades 64, mounted to a rotor disk 68, is arranged axially between the first and second fixed vane arrays 46a, 46c. A second stage array 46d of circumferentially spaced turbine blades 66 is arranged aft of the second array 46c of fixed vanes 62.

The turbine blades each include a tip 80 adjacent to a blade outer air seal 70 of a case structure 72. The first and second stage arrays 46a, 46c of turbine vanes and first and second stage arrays 46b, 46d of turbine blades are arranged within a core flow path C and are operatively connected to the low spool 30 in the example.

Each vane 60 includes an inner platform 74 and an outer platform 76 respectively defining inner and outer flow paths. The platforms 74, 76 are interconnected by an airfoil 78 extending in a radial direction Z. It should be understood that the turbine vanes may be discrete from one another or arranged in integrated clusters. The airfoil 78 provides leading and trailing edges 82, 84.

The airfoil 78 is provided between pressure (concave) and suction (convex) sides in an airfoil thickness direction, which is generally perpendicular to a chord-wise direction provided between the leading and trailing edges 82, 84

In one example, the turbine vanes 60 are constructed from a high strength, heat resistant material such as a nickel-based or cobalt-based superalloy, or of a high temperature, stress resistant ceramic or composite material. In cooled configurations, internal fluid passages and external cooling apertures provide for a combination of impingement and film cooling. In addition, one or more thermal barrier coatings, abrasion-resistant coatings or other protective coatings may be applied to the turbine vane 60.

Figure 2B schematically illustrates a first stage array 46a having at least one stress relief feature provided by a scallop 92 in an aft rail 90. The scallop may be any suitable shape, and in one example U-shaped. The stator vane assembly may be provided by a multi-vane configuration, for example, a triplet. An outer platform provides the rail 90 and supports multiple vanes 78a, 78b and 78c. During engine operation, the vanes 78a-78c create stress on the rail 90 due to the different radial forces applied by each vane 78a-78c on the rail 90, schematically illustrated by the arrows. The scallop 92 reduces the stress in the rail 90.

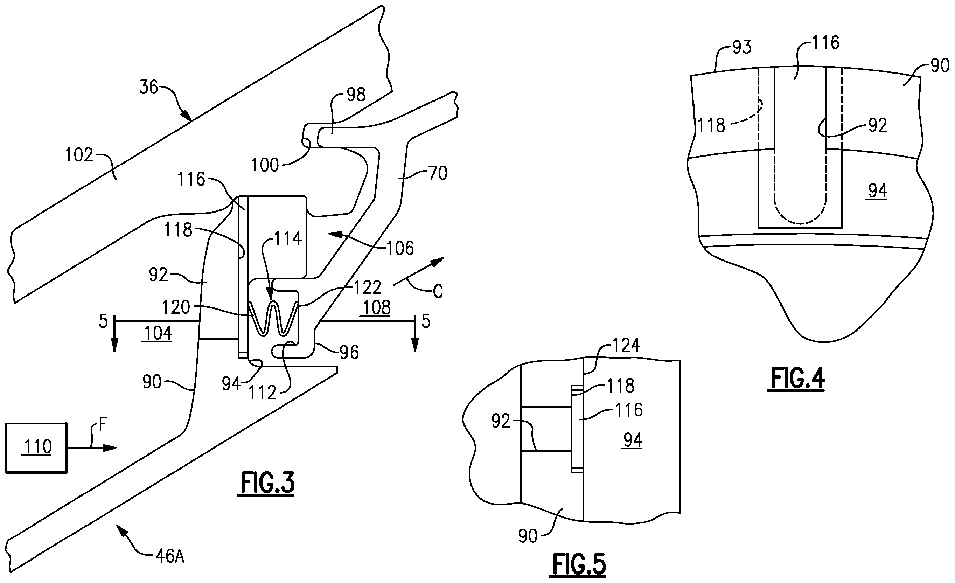

Referring to Figure 3, the stator vane seal assembly is shown in more detail. The scallop 92, while desirable for stress relief, creates an undesired leak path. To this end, a scallop seal 116 is provided to obstruct the scallop 92. For example, the scallop 92 extends radially to an outer periphery 93, as best shown in Figure 4, and to an annular groove 94 in the rail 90. Returning to Figure 3, the blade outer air seal 70 includes first and second flanges 96, 98 that are radially spaced apart from one another. The first flange 96 is received within the annular groove 94. The second flange 98 is received within an annular slot 100 in an outer case structure 102 provided by the static structure 36.

A first cavity 104 is arranged on an outer side or backside of the outer platform. A cooling source 110 communicates a cooling fluid F to the first cavity 104 to cool the stator vanes. The cooling source 110 is bleed air from the compressor section, in one example. A second cavity 106 is provided on one side of the blade outer air seal 70, and a third cavity 108 is provided on the other side of the blade outer air seal 70 in the core flow path C.

An annular groove 112 is provided in the first flange 96. An annular seal 114 is provided axially between and in engagement with the first flange 96, the rail 90 and the scallop seal 116, best shown in Figures 3 and 5. The inner seal 114 includes undulations and prevents the cooling fluid F from leaking from the first cavity 104 into both of the second and third cavities 106, 108. In the example, the annular seal 114 has first and second faces 120, 122 that respectively seal against a surface 124 of the rail 90 and the first flange 96. In the example, the surface 124 and scallop seal 116 are generally flush with one another.

With continuing reference to Figures 3-5, the scallop seal 116 is generally rectangular in shape in one example, although it should be understood that the scallop seal may be of any suitable shape or configuration. In one example, the scallop seal 116 is about 0.050 in (1.27 mm) thick. An axially extending recess 118, or keyhole slot, is provided in the rail 90, which receives the scallop seal 116. As an example, the scallop seal 116 is configured such that the stress relief function of the scallop 92 is not inhibited. For example, the scallop seal 116 may float within the recess 118 and/or may be configured to flex more easily than the structure of the rail 90.

Although an example embodiment has been disclosed, a worker of ordinary skill in this art would recognize that certain modifications would come within the scope of the claims. For that reason, the following claims should be studied to determine their true scope and content.

## Claims

1. A stator vane seal assembly for a gas turbine engine (20) comprising:
a vane (60) having a platform with a rail (90) with a scallop (92) extending axially through the rail (90); and
a scallop seal (116) obstructing the scallop (92),
wherein the rail (90) is a turbine vane aft rail (90), and **characterised in that**
the stator vane seal assembly comprises a blade outer air seal (70) supporting the aft rail (90) relative to an outer case structure (102),
and **in that** the stator vane seal assembly further comprises an annular seal (114) provided axially between and sealing against the blade outer air seal (70), the aft rail (90) and the scallop seal (116).

2. The stator vane seal assembly according to claim 1, wherein the aft rail (90) includes an annular groove (94), and the blade outer air seal (70) includes a first flange (96) received in the annular groove (94).

3. The stator vane seal assembly according to claim 1 or 2, wherein the scallop (92) extends radially to an outer periphery (93) of the rail (90).

4. The stator vane seal assembly according to claim 3, wherein the rail (90) includes a radially extending recess (118) receiving the scallop seal (116), the scallop seal (116) flush with a surface (124) of the rail (90).

5. The stator vane seal assembly according to claim 4, wherein the annular seal (114) engages the scallop seal (116) and the surface (124).

6. The stator vane seal assembly according to claim 1, comprising a first cavity (104) arranged on an outer side of a platform providing the rail (90), and the blade outer seal (70) separating second and third cavities (106, 108), the scallop seal (116) and the annular seal (114) configured to prevent fluid flow from the first cavity (104) to both of the second and third cavities (106, 108).

7. The stator vane seal assembly according to claim 6, wherein the scallop seal (116) is flush with a surface (124) of the rail (90), the annular seal (114) engaging the scallop seal (116) and the surface (124).

8. The stator vane seal assembly according to any preceding claim, wherein the scallop seal (116) is rectangular in shape.

9. The stator vane seal assembly according to any preceding claim, wherein the annular seal (114) includes undulations.

10. A gas turbine engine (20) comprising:
a compressor section;
a combustor in fluid communication with the compressor section; and
a turbine section in fluid communication with the combustor, the turbine section including a stator vane seal assembly as set forth in any preceding claim.

11. The gas turbine engine (20) according to claim 10, wherein the turbine section includes a high pressure section arranged fluidly forward of a low pressure turbine section, the vane (60) arranged in the low pressure turbine section.

12. The gas turbine engine (20) according to claim 10 or 11, comprising a cooling source (110) configured to provide a cooling fluid to a first cavity (104) arranged on an outer side of a platform (76) providing the rail (90), and the blade outer seal (70) separating second and third cavities (106, 108), the scallop seal (116) and the annular seal (114) configured to prevent fluid flow from the first cavity (104) to both of the second and third cavities (106, 108).

13. The gas turbine engine (20) according to claim 12, wherein the cooling source (110) is the compressor section.

## Patentansprüche

1. Leitschaufeldichtungsbaugruppe für ein Gasturbinentriebwerk (20), die Folgendes umfasst:
eine Leitschaufel (60), die eine Plattform mit einer Schiene (90) mit einem Bogen (92) aufweist, der sich axial durch die Schiene (90) erstreckt; und
eine Bogendichtung (116), die den Bogen (92) versperrt,
wobei die Schiene (90) eine hintere Schiene (90) für eine Turbinenleitschaufel ist und **dadurch gekennzeichnet ist, dass** die Leitschaufeldichtungsbaugruppe eine äußere Luftdichtung (70) für eine Laufschaufel umfasst, welche die hintere Schiene (90) relativ zu einer äußeren Hüllenstruktur (102) stützt,
und dadurch, dass die Leitschaufeldichtungsbaugruppe ferner eine Ringdichtung (114) umfasst, die axial zwischen der äußeren Luftdichtung (70) für eine Laufschaufel, der hinteren Schiene (90) und der Bogendichtung (116) bereitgestellt ist und gegen diese abdichtet.

2. Leitschaufeldichtungsbaugruppe nach Anspruch 1, wobei die hintere Schiene (90) eine Ringnut (94) beinhaltet und die äußere Luftdichtung (70) für eine Laufschaufel einen ersten Flansch (96) beinhaltet, der in der Ringnut (94) aufgenommen ist.

3. Leitschaufeldichtungsbaugruppe nach Anspruch 1 oder 2, wobei sich der Bogen (92) radial zu einer äußeren Peripherie (93) der Schiene (90) erstreckt.

4. Leitschaufeldichtungsbaugruppe nach Anspruch 3, wobei die Schiene (90) eine sich radial erstreckende Aussparung (118) beinhaltet, welche die Bogendichtung (116) aufnimmt, wobei die Bogendichtung (116) bündig mit einer Oberfläche (124) der Schiene (90) ist.

5. Leitschaufeldichtungsbaugruppe nach Anspruch 4, wobei die Ringdichtung (114) mit der Bogendichtung (116) und der Oberfläche (124) in Eingriff steht.

6. Leitschaufeldichtungsbaugruppe nach Anspruch 1, die einen ersten Hohlraum (104) umfasst, der auf einer äußeren Seite einer Plattform angeordnet ist, welche die Schiene (90) bereitstellt, und wobei die äußere Luftdichtung (70) für eine Laufschaufel einen zweiten und einen dritten Hohlraum (106, 108) trennt, wobei die Bogendichtung (116) und die Ringdichtung (114) dazu konfiguriert sind, einen Fluidstrom von dem ersten Hohlraum (104) zu sowohl dem zweiten als auch dem dritten Hohlraum (106, 108) zu verhindern.

7. Leitschaufeldichtungsbaugruppe nach Anspruch 6, wobei die Bogendichtung (116) bündig mit einer Oberfläche (124) der Schiene (90) ist, wobei die Ringdichtung (114) mit der Bogendichtung (116) und der Oberfläche (124) in Eingriff steht.

8. Leitschaufeldichtungsbaugruppe nach einem der vorhergehenden Ansprüche, wobei die Bogendichtung (116) eine rechteckige Form hat.

9. Leitschaufeldichtungsbaugruppe nach einem der vorhergehenden Ansprüche, wobei die Ringdichtung (114) Wellenformen beinhaltet.

10. Gasturbinentriebwerk (20), das Folgendes umfasst:
einen Verdichterabschnitt;
eine Brennkammer in Fluidkommunikation mit dem Verdichterabschnitt; und
einen Turbinenabschnitt in Fluidkommunikation mit der Brennkammer, wobei der Turbinenabschnitt eine Leitschaufeldichtungsbaugruppe nach einem der vorhergehenden Ansprüche beinhaltet.

11. Gasturbinentriebwerk (20) nach Anspruch 10, wobei der Turbinenabschnitt einen Hochdruckabschnitt umfasst, der fluidisch vor einem Niederdruckturbinenabschnitt angeordnet ist, wobei die Leitschaufel (60) in dem Niederdruckturbinenabschnitt angeordnet ist.

12. Gasturbinentriebwerk (20) nach Anspruch 10 oder 11, das eine Kühlquelle (110) umfasst, die konfiguriert ist, ein Kühlfluid einem ersten Hohlraum (104) bereitzustellen, der auf einer äußeren Seite einer Plattform (76) angeordnet ist, welche die Schiene (90) bereitstellt, und wobei die äußere Luftdichtung (70) für eine Laufschaufel einen zweiten und einen dritten Hohlraum (106, 108) trennt, wobei die Bogendichtung (116) und die Ringdichtung (114) dazu konfiguriert sind, einen Fluidstrom von dem ersten Hohlraum (104) zu sowohl dem zweiten als auch dem dritten Hohlraum (106, 108) zu verhindern.

13. Gasturbinentriebwerk (20) nach Anspruch 12, wobei die Kühlquelle (110) der Verdichterabschnitt ist.

## Revendications

1. Ensemble de joint d'étanchéité d'aube de stator pour une turbine à gaz (20) comprenant :
une aube (60) ayant une plateforme avec un rail (90) avec une échancrure (92) s'étendant axialement à travers le rail (90) ; et
un joint d'étanchéité d'échancrure (116) obstruant l'échancrure (92),
dans lequel le rail (90) est un rail arrière d'aube de turbine (90), et **caractérisé en ce que** l'ensemble de joint d'étanchéité d'aube de stator comprend un joint d'étanchéité à l'air extérieur d'aube (70) supportant le rail arrière (90) par rapport à une structure de boîtier externe (102),
et **en ce que** l'ensemble de joint d'étanchéité d'aube de stator comprend en outre un joint d'étanchéité annulaire (114) disposé axialement entre et étanche contre le joint d'étanchéité à l'air extérieur d'aube (70), le rail arrière (90) et le joint d'étanchéité d'échancrure (116).

2. Ensemble de joint d'étanchéité d'aube de stator selon la revendication 1, dans lequel le rail arrière (90) comporte une rainure annulaire (94), et le joint d'étanchéité à l'air extérieur d'aube (70) comporte une première bride (96) reçue dans la rainure annulaire (94).

3. Ensemble de joint d'étanchéité d'aube de stator selon la revendication 1 ou 2, dans lequel l'échancrure (92) s'étend radialement vers une périphérie extérieure (93) du rail (90).

4. Ensemble de joint d'étanchéité d'aube de stator selon la revendication 3, dans lequel le rail (90) comporte un évidement s'étendant radialement (118) recevant le joint d'étanchéité d'échancrure (116), le joint d'étanchéité d'échancrure (116) affleurant une surface (124) du rail (90).

5. Ensemble de joint d'étanchéité d'aube de stator selon la revendication 4, dans lequel le joint d'étanchéité annulaire (114) vient en prise avec le joint d'étanchéité d'échancrure (116) et la surface (124).

6. Ensemble de joint d'étanchéité d'aube de stator selon la revendication 1, comprenant une première cavité (104) agencée sur un côté extérieur d'une plate-forme fournissant le rail (90), et le joint d'étanchéité extérieur d'aube (70) séparant des deuxième et troisième cavités (106, 108), le joint d'étanchéité d'échancrure (116) et le joint d'étanchéité annulaire (114) étant configurés pour empêcher l'écoulement de fluide de la première cavité (104) vers les deuxième et troisième cavités (106, 108).

7. Ensemble de joint d'étanchéité d'aube de stator selon la revendication 6, dans lequel le joint d'étanchéité d'échancrure (116) affleure une surface (124) du rail (90), le joint d'étanchéité annulaire (114) venant en prise avec le joint d'étanchéité d'échancrure (116) et la surface (124).

8. Ensemble de joint d'étanchéité d'aube de stator selon une quelconque revendication précédente, dans lequel le joint d'étanchéité d'échancrure (116) est de forme rectangulaire.

9. Ensemble de joint d'étanchéité d'aube de stator selon une quelconque revendication précédente, dans lequel le joint d'étanchéité annulaire (114) comporte des ondulations.

10. Turbine à gaz (20) comprenant :
une section de compresseur ;
une chambre de combustion en communication fluidique avec la section de compresseur ; et
une section de turbine en communication fluidique avec la chambre de combustion, la section de turbine comportant un ensemble de joint d'étanchéité d'aube de stator selon une quelconque revendication précédente.

11. Turbine à gaz (20) selon la revendication 10, dans laquelle la section de turbine comporte une section haute pression disposée fluidiquement en avant d'une section de turbine basse pression, l'aube (60) étant agencée dans la section de turbine basse pression.

12. Turbine à gaz (20) selon la revendication 10 ou 11, comprenant une source de refroidissement (110) configurée pour fournir un fluide de refroidissement à une première cavité (104) disposée sur un côté extérieur d'une plate-forme (76) fournissant le rail (90), et le joint d'étanchéité extérieur d'aube (70) séparant les deuxième et troisième cavités (106, 108), le joint d'étanchéité d'échancrure (116) et le joint d'étanchéité annulaire (114) étant configurés pour empêcher l'écoulement de fluide de la première cavité (104) vers les deuxième et troisième cavités (106, 108).

13. Turbine à gaz (20) selon la revendication 12, dans laquelle la source de refroidissement (110) est la section de compresseur.
